# EUROPEAN PATENT APPLICATION

(11) **EP 4 825 669 A1**
(43) Date of publication of application: **21.10.2026**
(21) Application number: 25170723.8
(22) Date of filing: 15.04.2025
(51) Int. Cl.: B60R 21/207, B60R 21/2338

(54) **A CONNECTOR ARRANGEMENT TO BE USED IN A SAFETY SYSTEM TO BE MOUNTED ON A VEHICLE SEAT, A SAFETY SYSTEM AND USE OF SUCH ARRANGEMENT**

(71) Applicant: Autoliv Development AB, 447 83 Vårgårda (SE); RENAULT s.a.s., 92100 Boulogne-Billancourt (FR)
(72) Inventor: Hellot, Laurent, 76220 Gournay-en-Bray (FR); Broggini, Laurent, 76220 Gournay-en-Bray (FR); Charpentier, Frederic, 76220 Gournay-en-Bray (FR); Ribillard, Damien, 76220 Gournay-en-Bray (FR); Lengaigne, Laurent, 76220 Gournay-en-Bray (FR); Gailhard, Carole, 76220 Gournay-en-Bray (SE); Halgrin, Julien, 76220 Gournay-en-Bray (FR); Lesbats, Fabrice, 78280 GUYANCOURT (FR); Ruffet, Renaud, 78280 GUYANCOURT (FR)
(74) Representative: AWA Sweden AB

(57) **Abstract**

A connector arrangement (400) to be used in a safety system to be mounted on a vehicle seat is provided. The connector arrangement comprises a first and a second member (410). The first member (410) comprises in an end thereof a first channel (411) and a second channel (412). The first and second channels are arranged one after the other in a direction transverse a longitudinal direction L1 of the first member (410). The first member (410) comprises a cut-out (416) that forms a gap (415) that longitudinally separates the first and second channels (411, 412). The second member (450) comprises in one end thereof a loop (451). A locking pin (470) is configured to be inserted through the first channel (411), through the loop (451) and through the second channel (412) to thereby lockingly engage the first member (410) with the second member (450). The invention further relates to a safety system to be mounted on a vehicle seat, and the use of such connector arrangement.

## Description

### Technical field

The present invention refers to a connector arrangement to be used in a safety system to be mounted on a vehicle seat, a safety system to be mounted on a vehicle seat, and the use of such connector arrangement to interconnect a first and a second member forming part of a safety system to be mounted on a vehicle seat.

### Technical background

It is well known to use airbags in vehicles to protect seated passengers. The airbags are traditionally supported by the vehicle body's frame structure. It is also known to have airbags integrated in the seat structure. This allows the passenger to be protected no matter seat position. The seat integrated airbags may by way of example be arranged on one lateral side of the seat back, or on opposing lateral sides of the seat back. The lateral airbag is typically supplemented with a wrap-around belt that extends from an upper portion of a seatback, across the packed airbag and to a tensioning device that is arranged underneath the vehicle seat. In the event of an accident, the belt is configured to be tensioned by the belt tensioning device and form a reaction surface to the airbag as it is inflated and deployed. The reaction surface promotes the airbag to be deployed in a direction towards the seat and the seated person.

The airbag system and the tensioning device are typically provided as separate units and not always by one and the same supplier. The units are assembled and mounted to the vehicle seat. Since the units are part of a safety system, it is essential that the two units can be easily connected in an intuitive and fail-proof manner when mounted to a vehicle seat. It is also essential that the connection can withstand the forces involved during the tensioning should there be an accident.

### Summary

It is an object of the present invention to provide a connector arrangement that is easy and intuitive to handle when installing a safety system using such connector arrangement to a vehicle seat.

Another object is that the connector arrangement should not interfere with but easily conform to and follow the three-dimensional shape of the vehicle seat.

The solution should strive to avoid that the connector arrangement interferes with other features in the vehicle seat and in the worst-case scenario gets pinched.

These and other objects that will be apparent from the following summary and description are achieved by a connector arrangement to be used in a safety system to be mounted on a vehicle seat, the connector arrangement comprising:
a first member, which in an end thereof comprises a first channel and a second channel, the first and second channels being arranged one after the other in a direction transverse a longitudinal direction of the first member, and wherein the first member comprises a cut-out that forms a gap that longitudinally separates the first and second channels;
a second member, which in one end comprises a loop; and
a locking pin, wherein the locking pin is configured to be inserted through the first channel, through the loop and through the second channel to thereby lockingly engage the first member with the second member.

The invention provides an easy solution to connect two members of different configurations, one member comprising two channels and one member comprising a loop. The connection is made by the locking pin. The locking pin is configured to be arranged to extend through the two channels and the intermediate loop. Thereby a hinge-like connection is formed between the two members. Due to the orientation of the channels, the locking pin will extend transverse the longitudinal direction of both the first and the second member. It will thereby not negatively impact the ability of the interconnected members to conform to the vehicle seat. Also, the operation of the connection arrangement is very intuitive.

Each channel has an insert opening and an exit opening. The exit opening of the first channel is facing the insert opening of the second channel.

The connector arrangement may in one embodiment be supplied with the locking pin already being inserted to the first channel so that the leading end is arranged in the gap of the cut-out that separates the first and the second channels.

The first member may be a belt, and the second member may be a cord.

The term *"belt"* should in the context of the invention be understood as a long, slender band having a rectangular or substantially rectangular cross section. The belt may by way of example have a homogenous, extruded cross section or be a woven structure.

The term *"cord"* should in the context of the invention be understood as a long, slender rope, wire, string or even a chain. The cross section may by way of example be circular or substantially circular. The cord may have a homogenous cross section or be made up of several strands that are twisted or woven together.

The belt, which as such has a substantially rectangular cross section with two opposing, generally flat surfaces, may form a relatively wide and large reaction surface to the airbag upon inflation and deployment thereof. Further, the cord, which as such has a circular or substantially circular cross section, will more easily conform to and accommodate the different spatial, three-dimensional extensions that apply as seen along the lateral side of the vehicle seat with the seat back connecting to the seat pan, and not at least when connecting the restricting member to the tensioning device that typically is arranged centrally underneath the vehicle seat.

The first member may be made of an elastic material. The elastic material may by way of example be a textile material, a polymeric material or a rubber. The first member may be integrally formed with the wrap-around restriction member that is part of the airbag assembly. Alternatively, it may be of a different piece of material which in turn is attached to an end of such wrap-around restriction member. The attachment may be made by sewing, welding or adhesive bonding, or even by a combination of any of those.

The first and second channels may be formed by folding the first member and joining the thus formed overlapping wall portions of the first member by at least one joint extending in a direction transverse the longitudinal direction of the first member. The joint can also be referred to as a seam.

The thus formed channels will be defined by a respective envelope wall that is formed by the material making up the first member. The joint will extend along the longitudinal direction of the channel or channels. The joint may be continuous or dis-continuous. The joint preferably extends along the full longitudinal length of each channel.

The joint may be made by e.g. sewing, welding or adhesive bonding. The first and second channels may each be provided with its own joint. One joint may extend along both the first and the second channel. Hence, the joint may extend along the first channel, along the cut-out and along the second channel.

The first and second channels may each have a width that is gradually reduced as seen along the longitudinal direction of the first and second channels from an insert opening to an exit opening of the first and second channels.

Each channel has an insert opening and an exit opening. The exit opening of the first channel is facing the insert opening of the second channel. Hence, the exit opening is preferably wider than the insert opening. The respective channels may each be seen as having a funnel shape.

The first and second channels may each, in an alternative embodiment, have a waist portion having a locally reduced width as seen along the longitudinal direction of the first and second channels.

In such embodiment, the insert opening, and the exit opening of each channel may have the same width. The waist portion has in turn a width that is smaller than the width of the insert opening and the exit opening.

The locking pin may, as seen along its longitudinal direction, comprise a leading portion, an intermediate portion and a trailing portion. The locking pin may be configured to be inserted to the first and second channels into a mounting position where the intermediate portion is received inside the first and second channels and also through the loop of the second member. The intermediate portion is accordingly configured to serve as a hinge pin around which the first and second members may pivot.

The leading portion and the trailing portion will each be arranged on opposite edges of the first member. The leading portion and the trailing portions do thereby serve as physical stops that prevent the locking member from unintentionally being pushed or pulled out of engagement with the first and second channels.

The leading portion may have a pointed profile. The pointed profile may by way of example be cone shaped, wedge shaped, or arrow shaped. The pointed profile facilitates insertion of the locking pin through the first and second channels.

The leading portion may, at a widest section thereof as measured along the longitudinal direction of the locking pin, have a width that exceeds a width of a most narrow section as measured along the longitudinal extension of the first channel and the second channel in a condition when the elastic material in the first member is relaxed.

As a result of the difference in widths, the locking pin may be pushed in one direction into a channel but once the leading portion has exited the channel via its exit opening it cannot be pulled back. The leading portion may be seen as a barb.

The trailing portion may, at a widest section thereof as measured along the longitudinal direction of the locking pin, have a width that exceeds a width of an insert opening of the first channel.

As a result of the difference in widths, the trailing portion will serve as a physical stop that prevents the locking pin from being pushed too far into the first channels. Also, the trailing portion may be used as a pressure surface to which an operator may press her finger when pushing the locking pin into the channels.

The first member or the second member may support a flexible sheath, said flexible sheath being configured to be pulled from said supporting member towards the other member to thereby cover at least a portion of both the first member and the second member as seen in a condition when the first and second members are lockingly engaged.

The flexible sheath may be made of a material different from the material in the first and second members. The flexible sheath may by way of example be sewn to the first member in the event the first member is formed as a belt. The sheath will prevent the locking arrangement from causing undue wear of the seat back during the life length of the vehicle.

According to another aspect, the invention refers to a safety system to be mounted on a vehicle seat, the safety system comprising:
an airbag assembly configured to be supported by a lateral side of a vehicle seat, said airbag assembly comprising a folded and/or rolled airbag and a wrap-around restriction member extending across the airbag and configured to form a reaction surface upon inflation and deployment of the airbag;
a tensioning device comprising an actuator which upon activation is configured to pull a tensioning member; and
a connector arrangement with the features according to any of claims 1-11, wherein the first member is part of the wrap-around restriction member and the second member is part of the tensioning member, whereby the locking pin is configured to interconnect the airbag assembly with the tensioning device.

Accordingly, a safety system is provided which as such comprises an airbag assembly that will deploy upon inflation. To better control the deployment to provide a desired protection of a seated passenger, a wrap-around restriction member extends across the airbag. The wrap-around restriction member is configured to form a reaction surface to the airbag as it is deployed. This is made by tensioning the wrap-around restriction member. The tensioning is made by an actuation of the tensioning device which is configured to connect to the wrap-around restriction member via the connector arrangement.

The connector arrangement allows the airbag assembly and the tensioning device to be handled as separate units that are interconnected either before or during mounting to the vehicle seat. The airbag assembly may be contained prepacked, i.e rolled and/or folded together with the wrap-around restriction member, in a casing where the only portion protruding from the casing is a free end of the wrap-around restriction member to which the first member of the connector arrangement is attached. Correspondingly, the tensioning device may be provided as one unit with the second member of the connector arrangement arranged on the free end of the tensioning member. The two units may be mounted separately to the vehicle seat in their spatially different locations, one typically along a longitudinal side portion of the seat back and one typically below the seat panel. Once mounted, the first and second members are interconnected by inserting the locking pin. The features and advantages discussed above in view of the connector arrangement are equally and directly applicable to the safety system using such connector arrangement. Hence, for the sake of efficiency and to avoid undue repetition, reference is made to the sections above.

It is preferred that the wrap-around restriction member and the tensioning member have such lengths that the connector arrangement can be arranged in such position that it does not interfere with the functionality of the vehicle seat or any guide brackets that are used for guiding the tensioning member from the lower side of the seat panel towards the seat back.

The tensioning device may comprise an actuator and a pulling arrangement. The actuator may be a pyrotechnically operated piston which in one end is connected to the pulling arrangement. In the event an accident should be detected by one or more sensors of the vehicle and where the ECU (Electrical Control Unit) of the vehicle determines that the accident could be mitigated by the associated lateral airbag, the airbag is inflated while also the tensioning device is activated to tension the wrap-around restriction member to thereby form a reaction surface to the airbag as it is inflated and deployed.

According to yet another aspect, the invention refers to the use of a connector arrangement with the features according to any of claims 1-11 to interconnect a first and a second member forming part of a safety system to be mounted on a vehicle seat.

The features and advantages discussed above in view of the connector arrangement and the safety system using such connector arrangement are equally and directly applicable to the use of such connector arrangement. Hence, for the sake of efficiency and to avoid undue repetition, reference is made to the sections above.

According to yet another aspect, a vehicle seat is provided in which a first safety system according to claim 12 is arranged on a first lateral side of the vehicle seat, and a second safety system according to claim 12 is arranged on a second lateral side of the vehicle seat. The first and the second safety systems may have the same design and functionality. The features and advantages discussed above in view of the first seat-mounted airbag assembly are equally and directly applicable to the second seat-mounted airbag assembly. Hence, for the sake of efficiency and to avoid undue repetition, reference is made to the sections above.

The airbag assemblies are preferably arranged on opposite lateral sides of the vehicle seat to thereby provide a protection to the seated passenger from two opposite sides, one from the near side (closest to the door) and one from the far side (towards the longitudinal centreline of the vehicle). At least one of the two lateral airbags may be designed to deploy to form a frontal protection to thereby protect the chest portion and also provide a facial protection. The first and the second lateral airbags may be symmetric.

The wrap-around restricting member of the first airbag assembly and the wrap-around restricting member of the second airbag assembly may connect to a common tensioning device.

The common tensioning device may be arranged centrally on the lower side of the seat pan or underneath the vehicle seat. By being centrally arranged, the tensioning of the first and second wrap-around restricting members will be substantially uniform.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an, " "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

### Brief description of the drawings

The invention will be described in more detail with reference to the appended schematic drawings, which show examples of a presently preferred embodiment of the invention.
Fig. 1 is a schematic overview of one embodiment of a vehicle seat with two seat-mounted airbag assemblies, each comprising a lateral airbag arranged in the seat back.
Fig. 2 is a schematic front view of one embodiment of a vehicle seat with two seat-mounted airbag assemblies where the two airbags have been deployed.
Fig. 3 is a schematic side view of a vehicle seat with two seat-mounted airbag assemblies where the airbags have been deployed.
Fig. 4 discloses one embodiment of the connector arrangement according to the invention.
Fig. 5 is a schematic overview of a safety system according to the invention as mounted to a vehicle seat.
Fig. 6A discloses highly schematically the connector arrangement before interlocking its first and second members.
Fig. 6B discloses highly schematically the connector arrangement after interlocking its first and second members.

### Detailed description

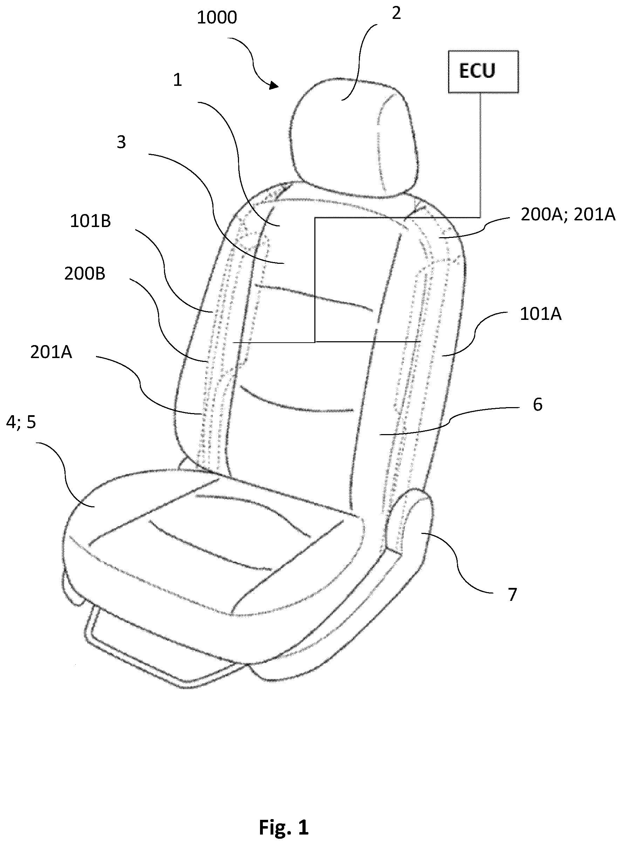

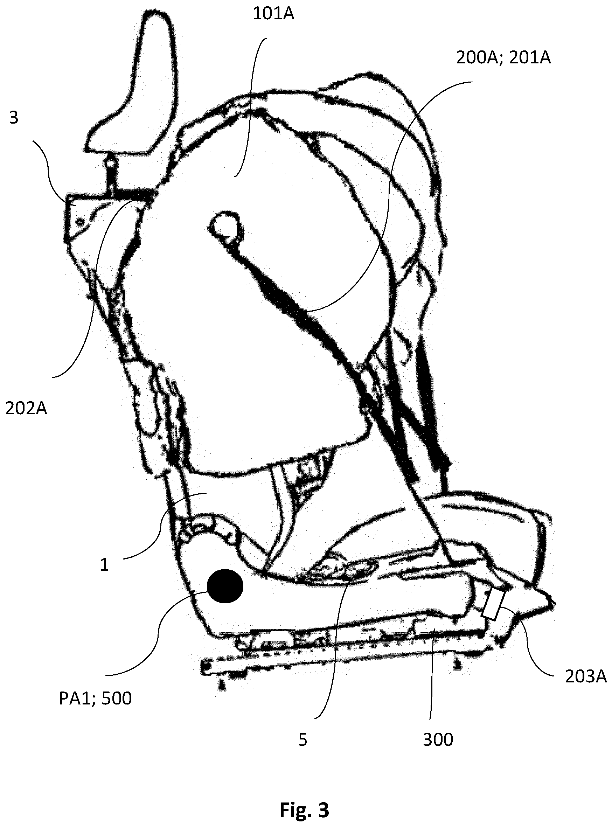

Starting with Fig. 1, one embodiment of a vehicle seat 1 with two seat-mounted airbag assemblies 1000 with a first and a second lateral airbag 101A; 101B is schematically disclosed. The vehicle seat 1 comprises a head rest 2, a seat back 3 and a seat cushion 4 supported by a seat pan 5. A trimming 7 extends along the opposing lateral sides of the seat cushion 4. The seat pan 5 is arranged inside the vehicle seat 1 below the seat cushion 4 and is hence not visible in Fig. 1 but can be seen in Fig. 3. Each lateral side of the seat back 3 comprises an airbag 101A; 101B. A wrap-around restricting member 200A, 200B extends along an outer surface of each lateral airbag 101A; 101B. As will be described below, the wrap-around restricting member 200A, 200B comprises at least one longitudinal member that extends from an upper end of the seat back 3, along the outer lateral side of the seat back 3, along the seat pan 5 and down to a tensioning device 300 that is arranged underneath the vehicle seat 1. The tensioning device 300 is hidden underneath the vehicle seat 1 but can be seen in Fig. 3.

The airbags 101A; 101B and wrap-around restricting members 200A, 200B are arranged inside an upholstery 6. The upholstery 6 is configured to rupture as the airbags 101A; 101B are inflated and deployed.

Each airbag 101A; 101B is connected to an inflator (not illustrated) which in turn is connected to an Electrical Control Unit (ECU). This is all well known to the skilled person and not further discussed.

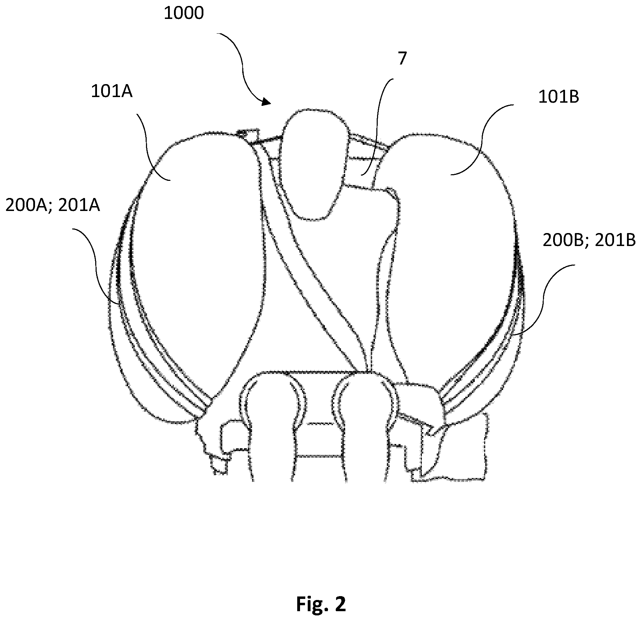

Turning to Fig. 2, the seat-mounted airbag assemblies 1000 are disclosed in a condition where the two lateral airbags 101A; 101B have been inflated and fully deployed. The two airbags 101A; 101B are disclosed as being mirrored, i.e., having the same design on both sides of the vehicle seat 1. The skilled person realizes that the airbags 101A; 101B may be designed in a number of different ways depending on which parts of the body of the seated passenger they are intended to protect. As a non-limiting example, the airbags 101A; 101B may be designed to provide not only a sidewards protection, but also a frontal protection. Also, it is to be understood that the two airbags 101A; 101B may have different designs. It is further to be understood that one of the airbags 101A; 101B may be omitted. The seat-mounted airbag assembly 1000 may accordingly comprise one lateral airbag 101A; 101B only.

The first lateral airbag 101A is associated with a first wrap-around restricting member 200A and the second lateral airbag 101B is associated with a second wrap-around restricting member 200B. The at least one longitudinal member 201A, 201B of each wrap-around restricting member 200A, 200B is configured to be tensioned and form a reaction surface to its associated airbag 101A; 101B when the airbag is inflated and deployed.

As can be seen in Fig. 2, each wrap-around restricting member 200A, 200B may comprise more than one longitudinal member 201A, 201B. Fig. 2 discloses an embodiment where each wrap-around restricting member 200A, 200B comprises two longitudinal members 201A; 201B that run side by side. The wrap-around restricting members 200A, 200B connect to one and the same tensioning device (omitted in Fig. 2). It is to be understood that each wrap-around restricting member 200A, 200B may connect to its own tensioning device.

Now turning to Fig. 3, a side view of a vehicle seat 1 is disclosed. The vehicle seat 1 is disclosed in a condition where the lateral airbags have been inflated and fully deployed. The arrangement may have the same design and functionality on both sides of the seat. Only one of the two is discussed below.

The trimming 7 on the vehicle seat 1 (see Fig. 1) has been removed to better illustrate the seat pan 5 and the tensioning device 300.

The seat back 3 connects to the seat pan 5 via a rear seat pan cross member 500 that extends between two opposing lateral side members of the seat pan 5 and pivotably connects the seat back 3 to the seat pan 5.

The wrap-around belt restricting member 200A comprises a longitudinal member 201A having an upper end 202A that is fixedly connected to a top portion of the seat back 3, and a lower end 203A that is fixedly connected to the tensioning device 300 that is arranged underneath the vehicle seat 1. As given above, the wrap-around belt restricting member 200A may comprise more than one longitudinal member 201A. Fig. 3 discloses two longitudinal members 201A that merge into one belt that connects to the tensioning device 300. Only one longitudinal member 201A will be described in detail below. It is to be stressed that the wrap-around belt restricting member may comprise one longitudinal member only or more than two longitudinal members.

The longitudinal member 201A extends along an exterior side of the inflated airbag 101A. The longitudinal member 201A is disclosed as having a substantially flat cross section along its contact surface with the airbag 101A. The longitudinal member 201A forms a reaction surface to the associated airbag 101A during inflation and deployment of the airbag 101A. The longitudinal member 201A may be seen as an external tether that forces the airbag 101A to conform to the body of the seated passenger.

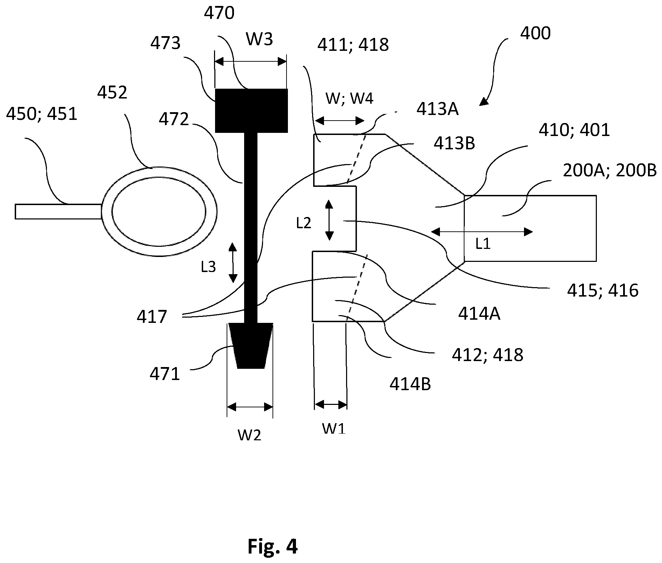

Now turning to Fig. 4, a connector arrangement 400 according to the invention is disclosed. The connector arrangement comprises a first member 410, a second member 450 and a locking pin 470. The first member 410 may be a belt 401. The second member 450 may be a cord 451.

The first member 410 that is configured to be connected to a free end of the wrap-around restriction member comprises a first channel 411 and a second channel 412. The first and second channels 411, 412 are arranged one after the other in a direction transverse a longitudinal direction L1 of the first member 410. Each channel 411, 412 has an insert opening 413A, 414A and an exit opening 413B, 414B. The exit opening 413B of the first channel 411 is facing the insert opening 414A of the second channel 412.

The first and second channels 411, 412 are separated by a gap 415. The gap 415 is formed by a cut-out 416 in the first member 410.

The first member 410 is made of an elastic material. The elastic material may by way of example be a textile material, a polymeric material or a rubber. The first member 410 may be integrally formed with a wrap-around restriction member 200A, 200B that is part of the airbag assembly. Alternatively, it may be of a different piece of material which in turn is attached to an end of such wrap-around restriction member. The attachment may be made by sewing, welding or adhesive bonding, or even by a combination of any of those.

The first and second channels 411, 412 may be formed by folding the first member 410 and joining the thus formed overlapping wall portions of the first member 410 by at least one joint 417 extending in a direction transverse the longitudinal direction L1 of the first member 410. The thus formed channels 411, 412 will be defined by a respective envelope wall 418 that is formed by the material making up the first member 410. The joint 417 will extend along the longitudinal direction L2 of the channel or channels 411, 412. The joint 417 may be continuous or dis-continuous. The joint 417 preferably extends along the full longitudinal length of each channel 411, 412. The joint may also e referred to as a seam.

The joint 417 may be made by e.g. sewing, welding or adhesive bonding. The first and second channels 411, 412 may each be provided with its own joint 417. One joint 417 may extend along both the first and the second channel 411, 412. Hence, the joint 417 may extend along the first channel 411, along the cut-out 416 and along the second channel 412.

The first and second channels 411, 412 are disclosed as having a width W that is gradually reduced as seen along the longitudinal direction L2 of the first and second channels 411, 412 from the insert opening 413A, 414A to an exit opening 413B, 414B of the first and second channels. The exit opening 413B of the first channel 411 is facing the insert opening 414A of the second channel 412. The exit openings 413B, 414B are preferably wider than the insert openings 413A, 414A. The respective channels 411, 412 may each be seen as having a funnel shape.

The second member 450 is formed as a cord which in one end comprises a loop 452. The loop 452 may be formed by bending the cord 451 or be formed by a loop that is attached to the cord.

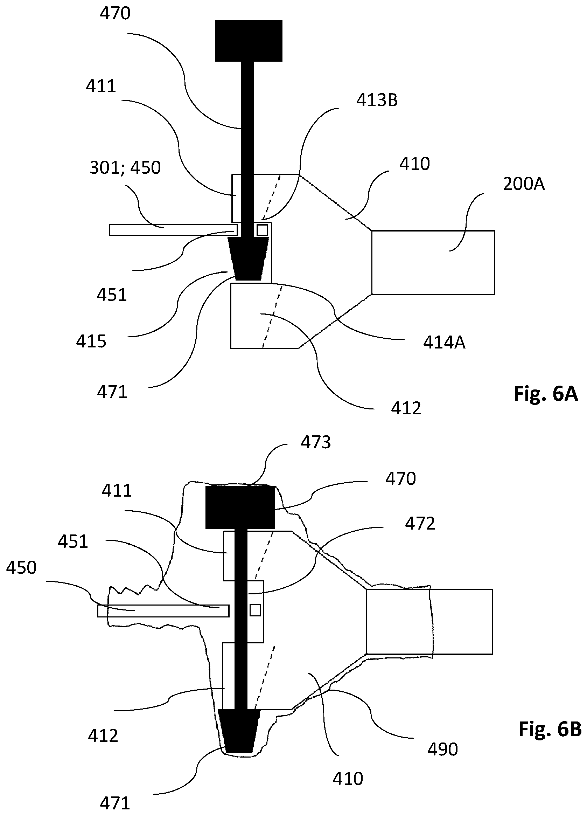

The locking pin 470 is an elongated body which preferable is made of a rigid material. The material may by way of example be a metal or a polymeric material. The locking pin 470 comprises, as seen along its longitudinal direction, a leading portion 471, an intermediate portion 472 and a trailing portion 473. The leading portion 471 is disclosed as having a pointed profile. The pointed profile is disclosed as having a cone shape. Alternatively, the pointed profile may be wedge shaped or arrow shaped. The pointed profile is configured to facilitate insertion of the locking pin 470 through the first and second channels 411, 412 as will be discussed below with reference to Figs 6A and 6B.

The leading portion 471 has by its pointed profile different widths as measured along the longitudinal direction of the locking pin 470. The widest section has a width W2 that exceeds a width of a most narrow section W1 as measured along the longitudinal extension L2 of the first channel 411 and the second channel 412 in a condition when the elastic material in the first member 410 is relaxed. As a result of the difference in widths, the locking pin 470 may be pushed in one direction into the channels 411, 412 but once the leading portion 471 has exited the channels 411, 412 via their respective exit opening 413B, 414B it cannot be pulled back. The leading portion 471 may accordingly be seen as a barb.

The trailing portion 473 has as measured along the longitudinal direction of the locking pin L3, a width W3 that exceeds a width W4 of the insert opening 413A of the first channel 411. As a result of the difference in widths, the trailing portion 473 will serve as a physical stop that prevents the locking pin 470 from being pushed too far into the first channel 411. Also, the trailing portion 473 may be used as a pressure surface to which an operator may press her finger when pushing the locking pin 470 into the channels 411, 412.

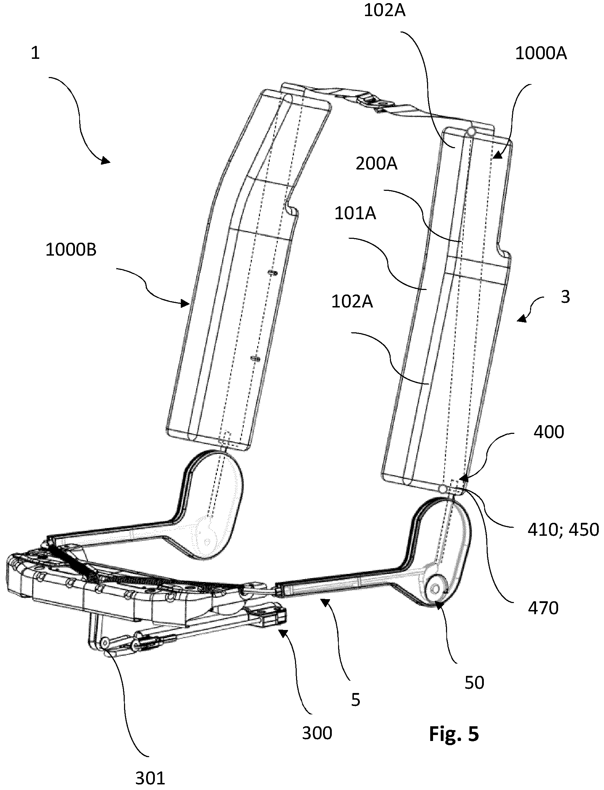

Now turning to Fig. 5 a schematic overview is disclosed of a safety system according to the invention as mounted to a vehicle seat. Typical features of the vehicle seat 1, all of them well known to the skilled person, such as the seat back, the upholstery, cushioning and the spring structure have been removed to facilitate the understanding. Since the seat-mounted airbag assemblies 1000A, 1000B on the two lateral sides of the vehicle seat are identical, only one assembly 1000A will be discussed in detail in the following unless nothing else is explicitly given.

The airbag assembly 1000A comprises a folded and/or rolled airbag 101A and a wrap-around restriction member 200A that extends across the airbag and that is configured to form a reaction surface upon inflation and deployment of the airbag. The airbag is contained in a casing 102A. The casing 102A comprises non-disclosed rupture lines to allow the airbag 101A to be deployed upon inflation. The casing can be omitted.

The tensioning device 300 is arranged at the seat pan 5. The tensioning device 300 is disclosed as being arranged underneath the vehicle seat 1 and may be supported either by the seat pan 5 or by the floor of the vehicle. The tensioning device 300 comprises an actuator which upon activation is configured to pull a tensioning member 301. The tensioning member 301 extends from the lower side of the seat pan 5, along a guide bracket 50 towards the seat back 3.

The free end of the wrap-around restriction member 200A is connected to the first member 410 forming part of the connector arrangement 400 of the type that has been described above. Further, a free end of the tensioning member 301 is connected to the second member 450 forming part of the connector arrangement 400. The first and second members 410, 450 are in turn interconnected by the locking pin 470. Hence, the locking pin 470 interconnects the airbag assembly 1000A with the tensioning device 300.

Hence, the connector arrangement 400 allows the airbag assembly 1000A and the tensioning device 300 to be handled as separate units that are interconnected either before or during mounting to the vehicle seat. The airbag assembly 1000A may be contained prepacked, i.e. rolled and/or folded together with the wrap-around restriction member 200A in a casing 102A where the only portion protruding from the casing is a free end of the wrap-around restriction member 200A to which the first member 410 of the connector arrangement 400 is attached. Correspondingly, the tensioning device 300 may be provided as one unit with the second member 450 of the connector arrangement 400 arranged on the free end of the tensioning member 301. The two units may be mounted separately to the vehicle seat in their spatially different locations, one typically along a longitudinal side portion of the seat back 2 and one typically below the seat pan 5. Once mounted, the first and second members are interconnected by inserting the locking pin 470.

It is preferred that the wrap-around restriction member 200A and the tensioning member 301 have such lengths that the connector arrangement 400 can be arranged in such position that it does not interfere with the functionality of the vehicle seat or any guide brackets 50 that are used for guiding the tensioning member 301 from the seat panel 5 towards the seat back 3. The connector arrangement 400 is displaced in view of the guide bracket 50.

It is to be understood that each of the two airbag assemblies 1000A, 1000B can connect to an individual tensioning member 301. The two tensioning members 301 may connect to a common tensioning device 300. Hence, the wrap-around restricting member 200A of the first airbag assembly 1000A and the wrap-around restricting member 200B of the second airbag assembly 1000B may connect to a common tensioning device 300. The common tensioning device may be arranged centrally on the lower side of the seat pan or underneath the vehicle seat.

The tensioning device 300 may comprise an actuator and a pulling arrangement. The actuator may be a pyrotechnically operated piston which in one end is connected to the pulling arrangement. In the event an accident should be detected by one or more sensors of the vehicle and where the ECU (Electrical Control Unit) of the vehicle determines that the accident could be mitigated by the associated lateral airbag, the airbag is inflated while also the tensioning device is activated to tension the wrap-around restriction member to thereby form a reaction surface to the airbag as it is inflated and deployed.

Now turning to Figs. 6A and 6B the operation of the connector arrangement will be discussed.

Starting with Fig. 6A, the first member 410 is disclosed as being connected to a free end of the wrap-around restriction member 200A of the airbag assembly (omitted). Also, the loop 451 of the second member 450 is connected to a free end of the tensioning member 301.

The loop 451 is inserted into the gap 415 that is separating the exit opening 413B of the first channel 411 and the insert opening 414A of the second channel 412.

The locking pin 470 is disclosed as being inserted through the first channel 411 and also through the loop 451. To reach this position, the operator has pushed the locking pin 470 into the first channel 411. The pointed leading portion 471 will guide the locking pin 470 through the funnel shaped channels 411, 412 to reach the position in Fig. 6B. Although the leading portion 471 is locally wider than the smallest width of the respective channel 411, 412, the elastic material of the first member 410 will allow the locking pin 470 to pass through both channels 411, 412.

Fig. 6B discloses the situation when the locking pin 470 has been fully inserted into its mounting position where the intermediate portion 472 is received inside the first and second channels 411, 412 and also through the loop 451 of the second member 450. The intermediate portion 472 is accordingly configured to serve as a hinge pin around which the first and second members 410, 450 may pivot. The leading portion 471 and the trailing portion 473 will each be arranged on opposite edges of the first member 410. The leading portion 471 and the trailing portion 473 do thereby serve as physical stops that prevent the locking pin 470 from unintentionally being pushed or pulled out of engagement with the first and second channels 411, 412.

Now turning to Fig. 4 anew. The leading portion 471 may, at a widest section thereof as measured along the longitudinal direction L3 of the locking pin 470, have a width W2 that exceeds the width W1 of the narrowest section as measured along the longitudinal direction L2 of the first channel 411 and the second channel 412 in a condition when the elastic material in the first member 410 is relaxed. As a result of these differences in widths, the locking pin 470 may be pushed in one direction into a channel 411, 412 but once the leading portion 471 has exited a channel via its exit opening 413B, 414B it cannot be pulled back.

Now turning to Fig. 6B anew. The first member 410 or the second member may support a flexible sheath 490. The flexible sheath 490 is configured to be pulled from the member 410; 450 that supports the sheath towards the other member 450; 410 to thereby cover at least a portion of both the first member 410 and the second member 450 as seen in a condition when the first and second members are lockingly engaged. The flexible sheath 490 may be made of a material different from the material in the first and second members. The flexible sheath 490 may be way of example be sewn to the first member 410 in the event the first member 410 is formed as a belt. The sheath 490 will prevent the locking arrangement from causing undue wear of the seat back during the life length of the vehicle.

Although the first and second channels have been discussed and illustrated as having a funnel shape, the skilled person realises that the channels may have other designs. The first and second channels may by way of example each have a waist portion that has a locally reduced width as seen along the longitudinal direction of the first and second channels. The insert opening, and the exit opening of each such channel may have the same width. The waist portion has in turn a width that is smaller than the width of the insert opening and the exit opening.

## Claims

1. A connector arrangement (400) to be used in a safety system to be mounted on a vehicle seat, the connector arrangement (400) comprising:
a first member (410), which in an end thereof comprises a first channel (411) and a second channel (412), the first and second channels (411, 412) being arranged one after the other in a direction transverse a longitudinal direction L1 of the first member (410), and wherein the first member (410) comprises a cut-out (416) that forms a gap (415) that longitudinally separates the first and second channels (411, 412);
a second member (450), which in one end comprises a loop (451); and
a locking pin (470), wherein the locking pin is configured to be inserted through the first channel (411), through the loop (451) and through the second channel (412) to thereby lockingly engage the first member (410) with the second member (450).

2. The connector arrangement according to claim 1, wherein the first member (410) is a belt, and the second member is a cord (451).

3. The connector arrangement according to claim 1 or 2, wherein the first member (410) is made of an elastic material.

4. The connector arrangement according to any of the preceding claims,
wherein the first and second channels (411, 412) are formed by the first member (410) being folded and joined to thus formed overlapping wall portions of the first member (410) by at least one joint (417) extending in a direction transverse the longitudinal direction L1 of the first member (410).

5. The connector arrangement according to any of the preceding claims,
wherein the first and second channels (411, 412) each has a width W that is gradually reduced as seen along a longitudinal direction L2 of the first and second channels (411, 412) from an insert opening (413A, 414A) to an exit opening (413B, 414B) of the first and second channels (411, 412).

6. The connector arrangement according to any of claims 1-4, wherein the first and second channels (411, 412) each has a waist portion having a locally reduced width as seen along the longitudinal direction of the first and second channels (411, 412).

7. The connector arrangement according to any of the preceding claims,
wherein the locking pin (470) as seen along its longitudinal direction L3 comprises a leading portion (471), an intermediate portion (472) and a trailing portion (473), and wherein the locking pin (470) is configured to be inserted to the first and second channels (411, 412) into a mounting position where the intermediate portion (472) is received inside the first and second channels (411, 412) and the leading portion (471) and the trailing portion (473) each are projecting out from the first and second channels (411, 412) on opposite edges of the first member (410).

8. The connector arrangement according to claim 7, wherein, the leading portion (471) has a pointed profile.

9. The connector arrangement according to claim 7 or 8, wherein the leading portion (471) at a widest section thereof as measured along a longitudinal direction L3 of the locking pin (470) has a width W2 that exceeds a width W1 of a most narrow section as measured along the longitudinal extension L2 of the first channel (411) and the second channel (412) in a condition when the material in the first member (410) is relaxed.

10. The connector arrangement according to any of claims 7-9, wherein the trailing portion (473), at a widest section thereof as measured along a longitudinal direction L3 of the locking pin (470), has a width W3 that exceeds a width W4 of an insert opening (413A) of the first channel (411).

11. The connector arrangement according to any of the preceding claims,
wherein the first member (410) or the second member (450) supports a flexible sheath (490), said flexible sheath being configured to be pulled from said supporting member towards the other member to thereby cover at least a portion of both the first member (410) and the second member (450) as seen in a condition when the first and second members (410, 450) are lockingly engaged.

12. A safety system to be mounted on a vehicle seat, the safety system comprising:
an airbag assembly (1000A; 1000B) configured to be supported by a lateral side of a vehicle seat, said airbag assembly comprising a folded and/or rolled airbag and a wrap-around restriction member (200A, 200B) extending across an airbag (101A, 101B) and configured to form a reaction surface upon inflation and deployment of the airbag;
a tensioning device (300) comprising an actuator which upon activation is configured to pull a tensioning member (301); and
a connector arrangement (400) with the features according to any of claims 1-11, wherein the first member (410) is part of the wrap-around restriction member (200A, 200B) and the second member (450) is part of the tensioning member (301), whereby the locking pin (470) is configured to interconnect the airbag assembly (1000A; 1000B) with the tensioning device (300).

13. Use of a connector arrangement with the features according to any of claims 1-11 to interconnect a first and a second member forming part of a safety system to be mounted on a vehicle seat.

## Amended claims

### Amended claims in accordance with Rule 137(2) EPC.

1. A connector arrangement (400) to be used in a safety system to be mounted on a vehicle seat, the connector arrangement (400) comprising:
a first member (410) being a belt, which in an end thereof comprises a first channel (411) and a second channel (412), the first and second channels (411, 412) being arranged one after the other in a direction transverse a longitudinal direction L1 of the first member (410), and wherein the first member (410) comprises a cut-out (416) that forms a gap (415) that longitudinally separates the first and second channels (411, 412);
a second member (450) being a cord, which in one end comprises a loop (451); and
a locking pin (470), wherein the locking pin is configured to be inserted through the first channel (411), through the loop (451) and through the second channel (412) to thereby lockingly engage the first member (410) with the second member (450).

2. The connector arrangement according to claim 1, wherein the first member (410) is made of an elastic material.

3. The connector arrangement according to claim 1 or 2,
wherein the first and second channels (411, 412) are formed by the first member (410) being folded and joined to thus formed overlapping wall portions of the first member (410) by at least one joint (417) extending in a direction transverse the longitudinal direction L1 of the first member (410).

4. The connector arrangement according to any of the preceding claims,
wherein the first and second channels (411, 412) each has a width W that is gradually reduced as seen along a longitudinal direction L2 of the first and second channels (411, 412) from an insert opening (413A, 414A) to an exit opening (413B, 414B) of the first and second channels (411, 412).

5. The connector arrangement according to any of claims 1-3, wherein the first and second channels (411, 412) each has a waist portion having a locally reduced width as seen along the longitudinal direction of the first and second channels (411, 412).

6. The connector arrangement according to any of the preceding claims,
wherein the locking pin (470) as seen along its longitudinal direction L3 comprises a leading portion (471), an intermediate portion (472) and a trailing portion (473), and wherein the locking pin (470) is configured to be inserted to the first and second channels (411, 412) into a mounting position where the intermediate portion (472) is received inside the first and second channels (411, 412) and the leading portion (471) and the trailing portion (473) each are projecting out from the first and second channels (411, 412) on opposite edges of the first member (410).

7. The connector arrangement according to claim 6, wherein, the leading portion (471) has a pointed profile.

8. The connector arrangement according to claim 6 or 7, wherein the leading portion (471) at a widest section thereof as measured along a longitudinal direction L3 of the locking pin (470) has a width W2 that exceeds a width W1 of a most narrow section as measured along the longitudinal extension L2 of the first channel (411) and the second channel (412) in a condition when the material in the first member (410) is relaxed.

9. The connector arrangement according to any of claims 6-8, wherein the trailing portion (473), at a widest section thereof as measured along a longitudinal direction L3 of the locking pin (470), has a width W3 that exceeds a width W4 of an insert opening (413A) of the first channel (411).

10. The connector arrangement according to any of the preceding claims,
wherein the first member (410) or the second member (450) supports a flexible sheath (490), said flexible sheath being configured to be pulled from said supporting member towards the other member to thereby cover at least a portion of both the first member (410) and the second member (450) as seen in a condition when the first and second members (410, 450) are lockingly engaged.

11. A safety system to be mounted on a vehicle seat, the safety system comprising:
an airbag assembly (1000A; 1000B) configured to be supported by a lateral side of a vehicle seat, said airbag assembly comprising a folded and/or rolled airbag and a wrap-around restriction member (200A, 200B) extending across an airbag (101A, 101B) and configured to form a reaction surface upon inflation and deployment of the airbag;
a tensioning device (300) comprising an actuator which upon activation is configured to pull a tensioning member (301); and
a connector arrangement (400) with the features according to any of claims 1-10, wherein the first member (410) is part of the wrap-around restriction member (200A, 200B) and the second member (450) is part of the tensioning member (301), whereby the locking pin (470) is configured to interconnect the airbag assembly (1000A; 1000B) with the tensioning device (300).

12. Use of a connector arrangement with the features according to any of claims 1-10 to interconnect a first and a second member forming part of a safety system to be mounted on a vehicle seat.
